# FASCICULE DE BREVET EUROPEEN

(11) **EP 1 094 231 B1**
(45) Date de publication et mention de la délivrance du brevet: **31.08.2005**
(21) Numéro de dépôt: 00410117.6
(22) Date de dépôt: 21.09.2000
(51) Int. Cl.: F16B 17/00, F16B 19/04, F16S 3/08, H02B 1/01, F16B 5/04

(54) **Dispositif de liaison mécanique d'un organe de jonction à un profilé métallique, et procédé d'assemblage**
Vorrichtung zur mechanischen Verbindung eines Verbindungselements mit einem Metallprofil und Verfahren zum Zusammenbau
Device for mechanic connection of a connecting member to metal profile, and method of assembling

(30) Priorité: 18.10.1999 FR 9913161
(43) Date de publication de la demande: 25.04.2001
(73) Titulaire: SCHNEIDER ELECTRIC INDUSTRIES SAS, 92500 Rueil-Malmaison (FR)
(72) Inventeur: Carle, Pierre, Schneider Electric Industries SA, 38050 Grenoble (FR); Laboch, Kazimir, Schneider Electric Industries SA, 38050 Grenoble (FR); Pin, Jean-Pierre, Schneider Electric Industries SA, 38050 Grenoble (FR)
(74) Mandataire: Broydé, Marc

(56) Documents cités:
- EP-A- 0 834 974
- DE-A- 3 611 245

## Description

### Domaine technique de l'invention

L'invention est relative à un procédé d'assemblage d'un profilé métallique creux en tôle d'acier sur un organe de jonction formé par une pièce massive en alliage métallique. Un tel procédé peut être utilisé pour réaliser un dispositif de liaison des montants et traverses d'une ossature d'armoire électrique.

### Etat de la technique antérieure

Les liaisons mécaniques traditionnelles pour l'assemblage de profilés métalliques peuvent être du type démontable ou indémontable.

Les liaisons démontables (EP-A-0 834 974) sont généralement réalisées par vissage au moyen d'éléments à vis ou vis-écrou. Il est nécessaire d'assurer le serrage individuel de chaque vis ou écrou pour obtenir une bonne rigidité mécanique de l'ossature. Dans le cas d'un châssis livré en kit, le temps de montage d'un tel châssis est relativement long.

Les liaisons indémontables sont effectuées par soudage, rivetage. Ces opérations sont le plus souvent opérées en usine, lorsque le châssis est livré assemblé.

### Objet de l'invention

L'objet de l'invention consiste à élaborer un procédé perfectionné d'assemblage d'un profilé métallique creux en tôle d'acier sur un organe de jonction formé par une pièce massive en alliage métallique.

Le procédé selon l'invention est caractérisé en ce :
- on emmanche l'organe de jonction dans le profilé en positionnant coaxialement un orifice circulaire du profilé en regard d'un trou borgne de plus grand diamètre ménagé dans l'organe de jonction,
- on effectue ensuite une opération de boutonnage en enfonçant un pion de blocage provoquant une déformation de la tôle du profilé, laquelle est repoussée à angle droit dans le trou avec formation d'un effet de coincement du pion de blocage.

Selon une caractéristique de l'invention, on utilise un pion de blocage en acier ayant un diamètre correspondant au diamètre du trou diminué de deux fois l'épaisseur de la tôle. La mise en place du pion de blocage s'opère au moyen d'un marteau de manière à obtenir un assemblage rigide et indémontable.

L'invention concerne également un dispositif de liaison mécanique d'un organe de jonction à un profilé métallique tel que revendiqué dans les revendications quatre et cinq.

### Description sommaire des dessins

D'autres avantages et caractéristiques ressortiront plus clairement de la description qui va suivre d'un mode de réalisation de l'invention donné à titre d'exemple, et représenté aux dessins annexés dans lesquels:
- la figure 1 est une vue schématique en coupe d'un bipode de jonction assemblé à un montant et une traverse d'un châssis;
- la figure 2 montre une vue en élévation du dispositif de liaison;
- la figure 3 représente une vue en coupe selon la ligne 3-3 de la figure 1;
- les figures 4 à 6 illustrent des vues schématiques des différentes phases de l'opération de boutonnage.

### Description d'un mode de réalisation préférentiel

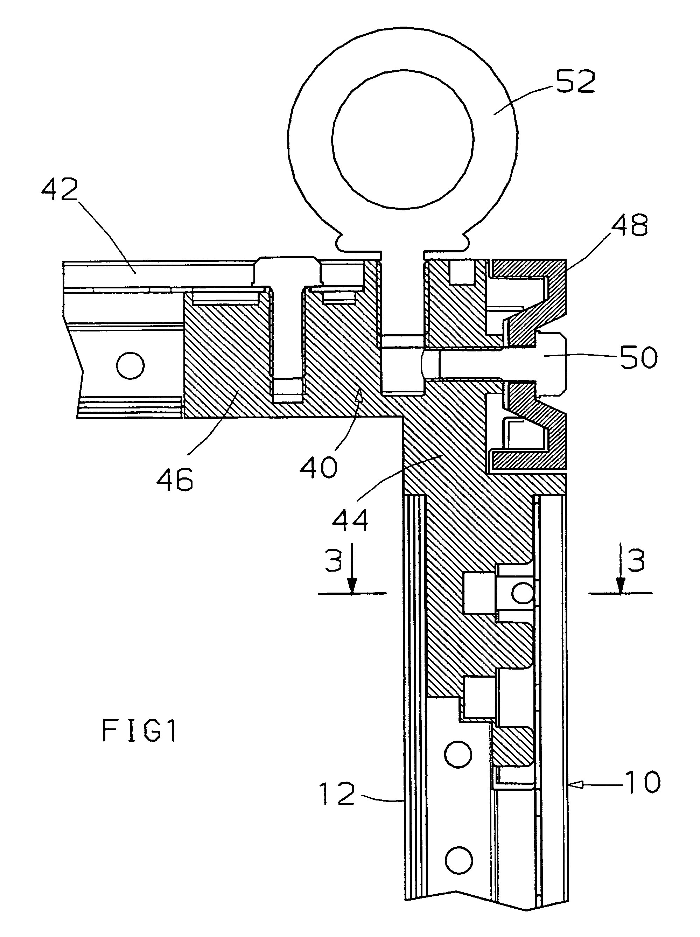

En référence aux figures 1 à 3, un montant 10 destiné à servir de pilier pour un châssis métallique d'une armoire électrique, comporte un profilé 12 creux en tôle d'acier, et présente une section quadrangulaire. La tôle découpée est pliée dans la direction longitudinale pour former quatre faces 14A, 14B, 14C, 14D parallèles deux à deux. La première face 14A comporte deux protubérances 16, 18 ayant des bords 20, 22 convergents constituant une cuvette. A l'intérieur du profilé, les deux protubérances 16, 18 forment des coins 24, 26 en formes de dièdres faisant un angle de l'ordre de 45°. La deuxième face 14B comprend une première aile 28 plane raccordée dans la zone médiane par un décrochement 30 à une deuxième aile 32 parallèle. La première aile 28 est en saillie de la deuxième aile 32, et délimite la protubérance 16 avec le bord 20 incliné de la face 14A. La troisième face 14C est pourvue d'une surface externe sensiblement plane.

Le profil de la quatrième face 14D est symétrique de celui de la deuxième face 14B par rapport au plan médian perpendiculaire aux première et troisième faces 14A, 14C. La première aile 34 plane est raccordée par un décrochement 36 à une deuxième aile 38 parallèle. La première aile 34 fait saillie de la deuxième aile 38, et délimite la protubérance 18 avec le bord 22 incliné de la face 14A.

Un bipode de jonction 40 rigide permet de solidariser le montant 10 à une traverse 42 formée par un profilé creux quadrangulaire, lequel est orienté perpendiculairement par rapport au montant 10. Le bipode de jonction 40 comporte une première pièce de liaison 44 emmanchée dans le montant 10, et une deuxième pièce de liaison 46 introduite dans la traverse 42 de manière à constituer un assemblage en équerre. Le bipode de jonction 40 est réalisé par une pièce massive en alliage métallique coulé, notamment en Zamak. Un longeron 48 est fixé sur le bipode de jonction 40 par une vis 50, et s'étend perpendiculairement au montant 10 et à la traverse 42. Un anneau de levage 52 peut également être vissé sur la face supérieure de la deuxième pièce de liaison 46 pour faciliter la manutention de l'ossature.

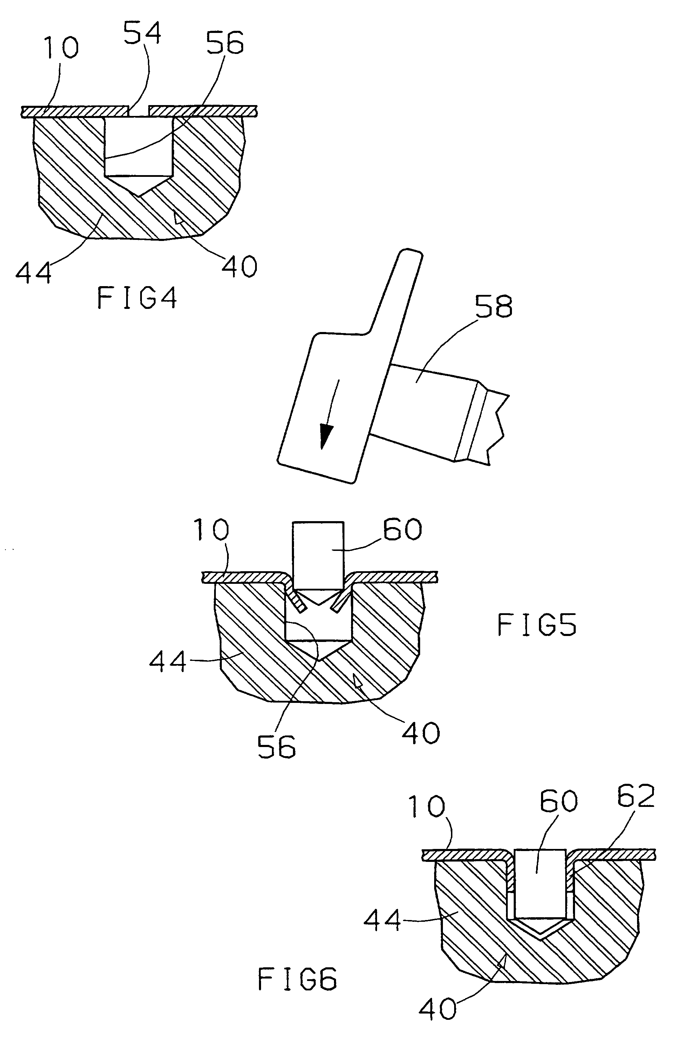

L'assemblage de la tôle du montant 10 sur le bipode de jonction 40 s'effectue par un procédé de boutonnage illustré schématiquement sur les figures 4 à 6.

La tôle d'acier a une épaisseur de l'ordre de 2,5mm, et comporte au moins un orifice 54 circulaire ayant un diamètre inférieur à celui d'un trou 56 borgne percé dans le bipode de jonction 40. Après emmanchement de la première pièce de liaison 44 du bipode 40 dans le montant 10, l'orifice 54 est coaxial avec le trou 56 (figure 4), et il suffit ensuite d'y introduire un pion de blocage 60 à l'aide d'un marteau 58 (figure 5). Le pion de blocage 60 cylindrique est en acier, et présente un diamètre correspondant au diamètre du trou 56, diminué de deux fois l'épaisseur de la tôle.

Le mouvement d'enfoncement du pion 60 provoque la déformation de la tôle, laquelle est repoussée à angle droit dans le trou 56 en formant un renfort 62 annulaire, assurant un effet de coincement du pion de blocage 60 (figure 6). Dans cette position insérée, le pion de blocage 60 est indémontable, et n'est pas en saillie de la surface extérieure du profilé 12.

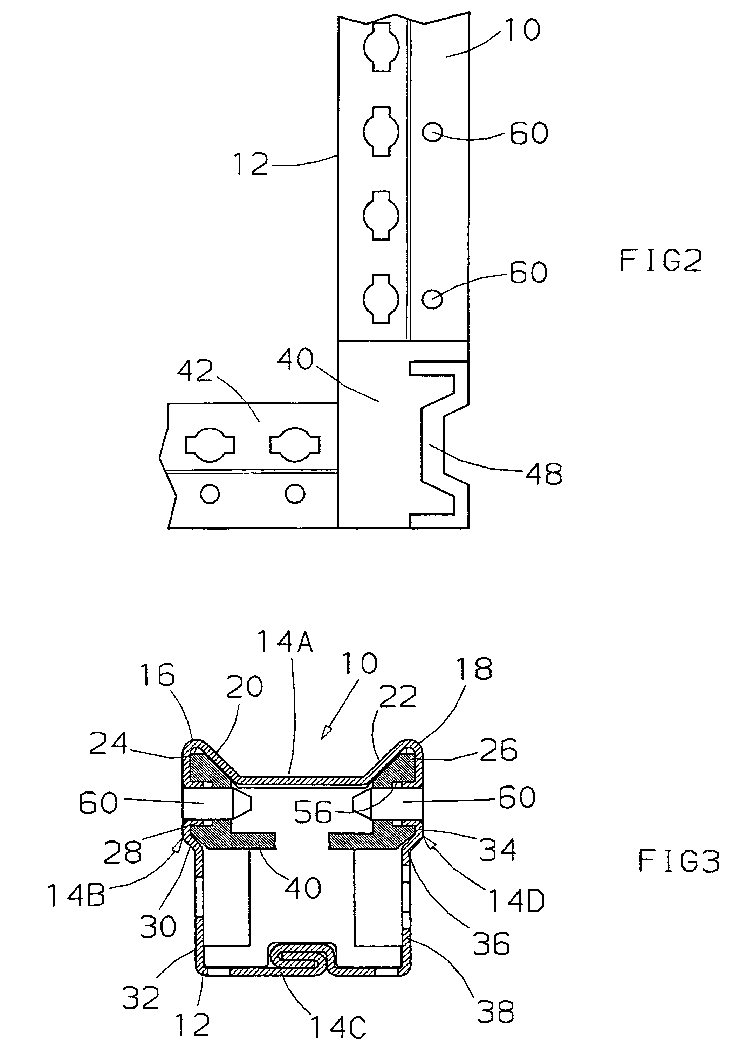

Sur la figure 2, un pion de blocage 60 est enfoncé avantageusement au niveau de chaque première aile 28, 34 plane des faces 14B, 14D de manière à assurer un verrouillage positif du bipode 40 dans les coins 24, 26 du montant 10.

Le même procédé est utilisé pour l'assemblage de la traverse 42.

## Revendications

1. Procédé d'assemblage d'un profilé (12) métallique creux en tôle d'acier sur un organe de jonction formé par une pièce massive en alliage métallique, **caractérisé par** les étapes successives suivantes:
- on emmanche l'organe de jonction dans le profilé (12) en positionnant coaxialement un orifice (54) circulaire du profilé en regard d'un trou (56) borgne de plus grand diamètre ménagé dans l'organe de jonction,
- on effectue ensuite une opération de boutonnage en enfonçant un pion de blocage (60) provoquant une déformation de la tôle du profilé (12), laquelle est repoussée à angle droit dans le trou (56) avec formation d'un effet de coincement du pion de blocage (60).

2. Procédé d'assemblage selon la revendication 1, **caractérisé en ce qu'**on utilise un pion de blocage (60) en acier ayant un diamètre correspondant au diamètre du trou (56) diminué de deux fois l'épaisseur de la tôle.

3. Procédé d'assemblage selon la revendication 1 ou 2, **caractérisé en ce que** la mise en place du pion de blocage (60) s'opère au moyen d'un marteau (58) de manière à obtenir un assemblage indémontable.

4. Dispositif de liaison mécanique d'un organe de jonction à un profilé (12) métallique, réalisé selon le procédé d'assemblage de l'une des revendications 1 à 3, dans lequel l'organe de jonction est formé par un bipode (40) comportant au moins une pièce de liaison (44) ayant un trou borgne (56) et étant emmanchée dans le profilé (12), ledit profilé ayant un orifice (54) de diamètre inférieur à celui du trou borgne (56), l'orifice (54) et le trou borgne (56) étant coaxiaux après emmanchement et étant destinées à recevoir un pion de blocage (60) assurant un verrouillage positif du bipode (40) sur le profilé (12).

5. Dispositif de liaison selon la revendication 4, **caractérisé en ce que** le diamètre du pion de blocage (60) correspond au diamètre du trou borgne (56) diminué de deux fois l'épaisseur de la tôle du profilé (12).

## Patentansprüche

1. Verfahren zur Verbindung eines aus Stahlblech bestehenden Metall-Hohlprofils (12) mit einem als Massivteil aus einer Metalllegierung ausgebildeten Verbindungselement, **gekennzeichnet durch** nachstehende aufeinander folgende Arbeitsschritte:
- Das Verbindungselement wird in das Profil (12) eingesteckt, wobei eine kreisrunde Öffnung (54) des Profils koaxial gegenüber einer, im Verbindungselement ausgebildeten Blindbohrung (56) mit größerem Durchmesser positioniert wird;
- anschließend erfolgt eine Verzapfung **durch** Einschlagen eines Blockierzapfens (60), wodurch das Profilblech (12) verformt und im rechten Winkel in die Bohrung (56) hineingedrückt wird und dabei ein Einklemmen des Blockierzapfens (60) bewirkt.

2. Verbindungsverfahren nach Anspruch 1, **dadurch gekennzeichnet, dass** ein Blockierzapfen (60) aus Stahl verwendet wird, dessen Durchmesser dem Durchmesser der Bohrung (56), vermindert um die zweifache Dicke des Blechs entspricht.

3. Verbindungsverfahren nach Anspruch 1 oder 2, **dadurch gekennzeichnet, dass** das Einbringen des Blockierzapfens (60) mit Hilfe eines Hammers (58) erfolgt, derart dass eine unlösbare Verbindung entsteht.

4. Anordnung zur mechanischen Verbindung eines Verbindungselements mit einem Metallprofil (12) nach dem Verfahren gemäß einem der Ansprüche 1 bis 3, bei welcher Anordnung das Verbindungselement als Winkeleisen (40) ausgebildet ist, das mindestens ein Verbindungsteil (44) mit einer darin eingebrachten Blindbohrung (56) umfasst und in das Profil (12) eingesteckt wird, wobei das genannte Profil eine Öffnung (54) aufweist, deren Durchmesser kleiner ist als der Durchmesser der Blindbohrung (56), die Öffnung (54) und die Blindbohrung (56) nach dem Einsteckvorgang koaxial zueinander liegen und dazu dienen, einen Blockierzapfen (60) aufzunehmen, der eine sichere Verriegelung des Winkeleisens (40) im Inneren des Profils (12) gewährleistet.

5. Verbindungsanordnung nach Anspruch 4, **dadurch gekennzeichnet, dass** der Durchmesser des Blockierzapfens (60) dem Durchmesser der Blindbohrung (56), vermindert um die zweifache Blechdicke des Profils (12) entspricht.

## Claims

1. Assembly process for assembling a hollow metal section (12) made of steel plate to a joining part formed by a bulk part made of metal alloy, **characterized by** the following successive steps:
- the joining part is engaged in the section (12) by coaxially positioning a circular opening (54) of the section facing a blind hole (56) of larger diameter arranged in the joining part,
- a securing operation is then performed by driving in a locking pin (60) causing a deformation of the metal plate of the section (12) which is pushed at right angles into the hole (56) with formation of a wedging effect of the locking pin (60).

2. Assembly process according to claim 1, **characterized in that** a steel locking pin (60) is used having a diameter corresponding to the diameter of the hole (56) less twice the thickness of the metal plate.

3. Assembly process according to claim 1 or 2, **characterized in that** fitting of the locking pin (60) is performed by means of a hammer (58) so as to obtain an assembly that is undetachable.

4. Mechanical connection device of a joining part to a metal section (12), achieved according to the assembly process of one of the claims 1 to 3, wherein the joining part is formed by a bipod (40) comprising at least one joining part (44) having a blind hole (56) and being engaged in the section (12), said section having an opening (54) of smaller diameter than that of the blind hole (56), the opening (54) and the blind hole (56) being coaxial after engagement and being designed to receive a locking pin (60) performing positive locking of the bipod (40) onto the section (12).

5. Connection device according to claim 4, **characterized in that** the diameter of the locking pin (60) corresponds to the diameter of the blind hole (56) less twice the thickness of the metal plate of the section (12).
